# EUROPEAN PATENT APPLICATION

(11) **EP 4 485 219 A1**
(43) Date of publication of application: **01.01.2025**
(21) Application number: 23214129.1
(22) Date of filing: 04.12.2023
(51) Int. Cl.: G06F 13/38

(54) **METHODS AND APPARATUS TO ROUTE DISPLAY STREAM DATA**

(30) Priority: 30.06.2023 US 202318345748
(71) Applicant: INTEL Corporation, Santa Clara, CA 95054 (US)
(72) Inventor: CHEN, Huimin, Beaverton, 97006 (US); AKIYAMA, James, Tigard, 97223 (US); HOWARD, John, Hillsboro, 97124 (US); GOPALAKRISHNAN, Venkataramani, Folsom, 95630 (US); BAILUR, Nirmala, 560103 Bangalore (IN)
(74) Representative: Rummler, Felix

(57) **Abstract**

Systems, apparatus, articles of manufacture, and methods are disclosed to route display stream data. An example system disclosed herein to route display stream data includes a circuit board comprising decoding circuitry to decode Peripheral Component Interconnect Express (PCIe) data packets into a display port stream data, the PCIe data packets encoded by a discrete graphics circuitry, and a Universal Serial Bus (USB) connector on the circuit board coupled to the decoding circuitry, wherein the USB connector is to output the display port stream data.

## Description

### FIELD OF THE DISCLOSURE

This disclosure relates generally to electronic devices and, more particularly, to methods and apparatus to route display stream data.

### BACKGROUND

In recent years, Universal Serial Bus Type-C (USB-C) ports utilizing the USB4 protocol have become a useful and powerful interface for transferring data and delivering power. Original Equipment Manufacturers (OEMs) and Original Design Manufacturers (ODMs) utilize USB-C ports in various devices.

### BRIEF DESCRIPTION OF THE DRAWINGS

FIG. 1 illustrates a personal computer (PC) with a Discrete Graphics (DG) card and a USB Add-In-Card (AIC) connected with cables running outside the housing of the PC.
FIG. 2 illustrates an example PC including Discrete Graphics (DG) circuitry and a System-on-Chip (SoC) to route display stream data within the PC housing for output via a USB connector.
FIG. 3 illustrates an example implementation of the circuitry of FIG. 2.
FIG. 4 is a block diagram of an example implementation of the DG circuitry and the SOC of FIG. 3.
FIG. 5 is an alternative implementation of the DG circuitry and the SOC of FIG. 3.
FIG. 6 is an alternative implementation of the SOC of FIG. 3.
FIG. 7 is a flowchart representative of example machine readable instructions and/or example operations that may be executed, instantiated, and/or performed by the example DG circuitry and SOC of FIG. 2, 3, 4, 5, or 6.
FIG. 8 is a flowchart representative of example machine readable instructions and/or example operations that may be executed, instantiated, and/or performed by the DG circuitry of FIG. 2, 3, 4, 5, or 6.
FIG. 9 is a flowchart representative of example machine readable instructions and/or example operations that may be executed, instantiated, and/or performed by the SOC of FIG. 3, 4, or 6.
FIG. 10 is a flowchart representative of example machine readable instructions and/or example operations that may be executed, instantiated, and/or performed by the SOC of FIG. 5.

In general, the same reference numbers will be used throughout the drawing(s) and accompanying written description to refer to the same or like parts. The figures are not necessarily to scale. Instead, the thickness of the layers or regions may be enlarged in the drawings. Although the figures show layers and regions with clean lines and boundaries, some or all of these lines and/or boundaries may be idealized. In reality, the boundaries and/or lines may be unobservable, blended, and/or irregular.

### DETAILED DESCRIPTION

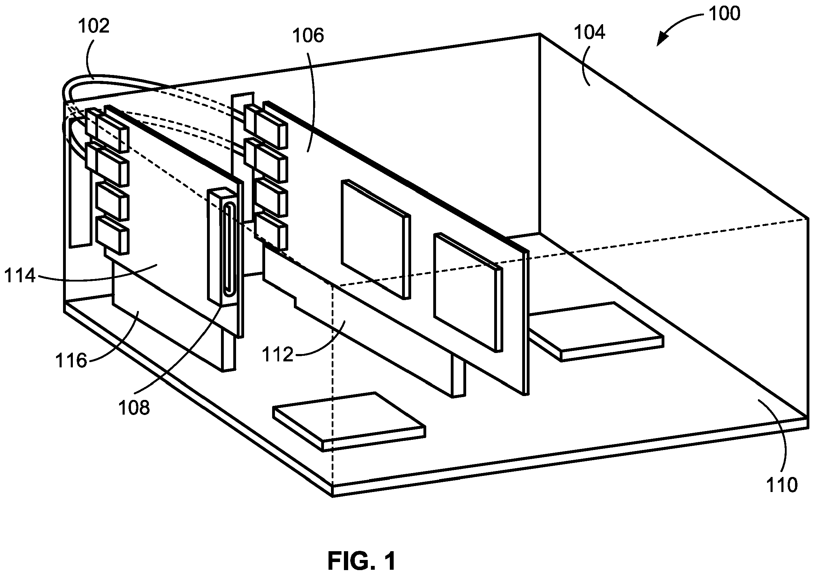

FIG. 1 illustrates a Personal Computer (PC) 100 which employs cables 102 external to or internal to a PC housing 104 to route output of Display Port (DP) circuitry on a Display Graphics (DG) Add in Card (AIC) card 106 to a USB add in card 114 that contains a USB4 sub-system (USB4SS) with a USB Type-C connector 108. Within the housing 104 of the PC 100 is a motherboard 110. The DG card 106 is coupled to the motherboard 110 via a Peripheral Component Interconnect Express Graphics (PEG) socket or slot 112. The DG card 106 generates a display port (DP) output. A USB Add in Card (AIC) with USB4SS 114 is also coupled to the motherboard 110 via a Peripheral Component Interconnect Express (PCIe). The USB4SS contains adapters to display port (DP) and PCIe to route DP output to the USB Type-C connector 108. The DG card 106 of FIG. 1 routes the DP output to the USB AIC 114 via external cables 102 connected between the DG card 106 and the USB AIC 114. The cables 102 between the DG card 106 and the USB AIC 114 extend outside or inside the PC housing 104. Such exterior cables 102 although functional, are a visual nuisance to consumers. The cables 102 add cost to consumers and take up space outside the PC housing 104 and can potentially be inadvertently pulled out of the PC 100. Moreover, the cables 102 are unsightly.

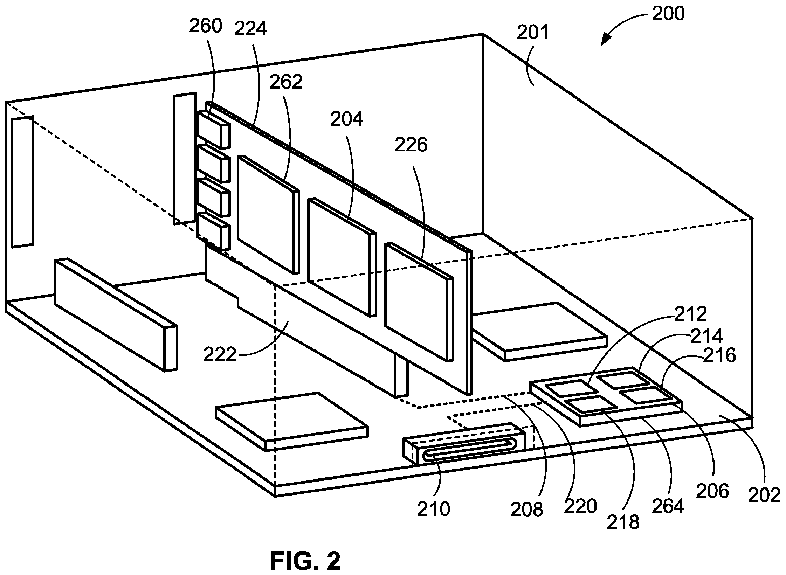

FIG. 2 illustrates an example PC 200 constructed in accordance with teachings of this disclosure. The example PC 200 of FIG. 2 includes a housing 201. The housing 201 in the example of FIG. 2 has a rectangular form factor. Within the housing 201 is a circuit board 202 (e.g., a motherboard). The example PC 200 of FIG. 2 also includes Discrete Graphics (DG) circuitry 204 and a System-on-Chip (SOC) 206, which cooperate to route display stream data from the DG circuitry 204 within the PC housing 201 for output via a USB connector 210. In some examples, the DG circuitry 204 can be implemented using a discrete graphics (DG) card 224. In such examples, the DG card 224 is connected to the circuit board 202 via a connector 222. In some examples, the connector 222 is a Peripheral Component Interconnect Express Graphics (PEG) socket or slot. However, other type(s) and/or number(s) of connector(s) may be employed. There is no cabling external to the housing 201 to couple the DG circuitry 204 to a USB sub-system 216. The example USB sub-system 216 can be implemented using USB 4.0 protocol. However, past, present and/or future protocols may likewise be employed. For example, standards such as USB 4.0 are updated and/or replaced from time to time. It is contemplated that such future protocols may likewise be employed without departing from the scope or spirit of this disclosure.

The DG circuitry 204 is a discrete graphics (DG) card 224 that process graphics and generates display. The DP source 262 or input source to the DG card 224 is an external video signal that is provided by the DG card 224 or via a display output connector 260 on the DG card 224. In this example, the display output connector 260 is a display engine port. In some examples, the display engine port can be a display port (DP) or a High-Definition Multimedia Interface (HDMI) port. The DG circuitry 204 generates the DP stream data as a result of graphics rendering. The DP stream data of some examples is a stream of DP packets. The DG circuitry 204 of the illustrated example includes a display stream encoder 226. The display stream encoder 226 encodes the DP packets into PCIe Transaction Layer data packets. The DG circuitry 204 establishes a PCIe peer-to-peer (P2P) connection 208 with the SOC 206. The connection 208 is a physical link on the circuit board 202, such as a trace, circuit path or a PCIe bus. Alternatively, the connection 208 may be wireless, such as wireless PCIe. The DG circuitry 204 outputs the PCIe Transaction Layer data packets over the connection 208 to the SOC 206.

The SOC 206 of the example of FIG. 2 includes root port circuitry 212, decoding circuitry 214, and a USB sub-system 216. The SOC 206 of the illustrated example obtains the output of the DG circuitry 204 via the connection 208. The SOC 206 decodes or translates the PCIe Transaction Layer data packets to reconstruct the DP stream data produced by the DP source 262. The SOC 206 of this example is mounted to the circuit board 202 via a socket 264. However, other type(s) and/or number(s) of sockets(s) may be employed. Alternatively, the SOC 206 can be mounted directly to the circuit board 202.

In more detail, the encoder 226 of the illustrated example separates timing information from the DP data packets into timing packets. The timing packets are encoded either in the header of the PCIe data packets or transferred to other end points as data in separate PCIe packets. The SOC 206 reconstructs the PCIe data packets as DP traffic with timing information. The decoding circuitry 214 (sometimes referred to as decoder) of the SOC matches the PCIe data packets with the timing packets based on the packet's header.

For the purpose of decoding the Peripheral Component Interconnect Express (PCIe) Transaction Layer data packets into DP stream data, SOC 206 includes decoding circuitry 214. In the example of FIG. 2, the decoding circuitry 214 is implemented using root complex integrated end point (RCiEP) circuitry. However, other type(s) of decoding circuitry may be employed. The decoding circuitry 214 is integrated on the SOC. The decoding circuitry 214 decodes the PCIe Transaction Layer data packets to extract DP data packets and reconstruct it as DP traffic with timing information (i.e., a DP stream data). In some examples, the timing information is received as part of the header of the PCIe Transaction Layer data packets. In some examples, the timing information is received as separate PCIe packets. When the timing information is received as separate PCIe packets, the decoding circuitry 214 will match the PCIe Transaction Layer data packets with the timing information using the packet's header.

Once reconstructed, the DP traffic is transmitted through a parallel interface to a USB sub-system 216. The USB sub-system 216 performs DP tunneling or DP alternate mode. In DP tunneling the USB sub-system 216 converts the DP protocol packets into USB transport packets. In some examples, the USB transport packets can be USB4 transport packets. In DP alternate mode, the USB sub-system 216 allows USB interface 210 to directly output the DP signals. In the illustrated example, the USB sub-system 216 is integrated in the SOC 206. However, in other examples, the USB sub-system 216 may be external to the SOC 206. The USB sub-system 216 is communicatively coupled to the USB connector 210 via a trace or other connection 220 on the circuit board 202.

The USB connector 210 of the illustrated example is accessible from external of the housing 201 and includes a cable connection interface that allows connection with USB devices to allow transfer of digital data (e.g., DG display stream data) over a USB cable. The USB connector may be implemented, for example, as a USB Type-C connector.

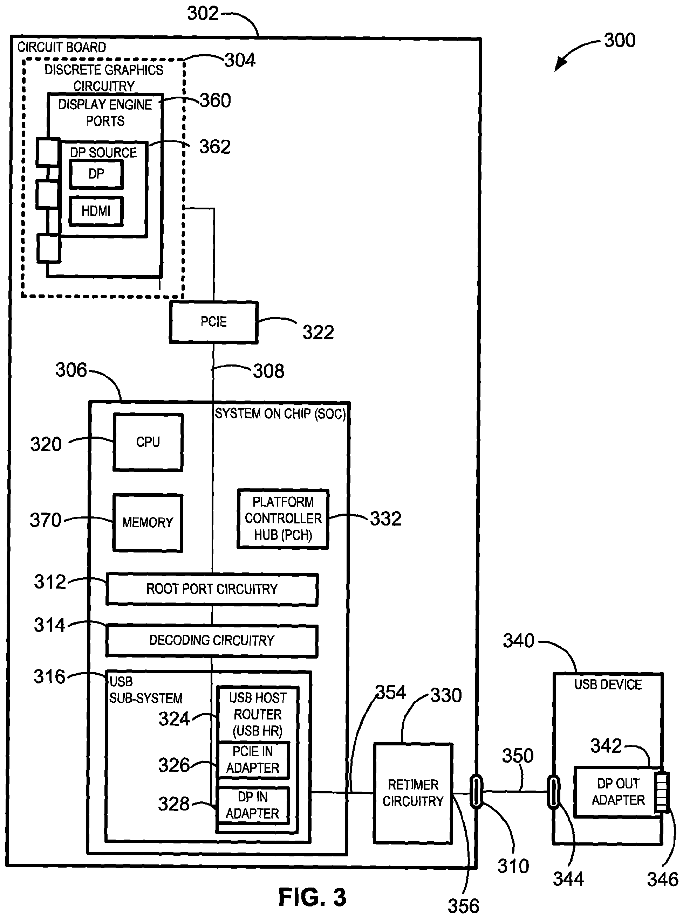

FIG. 3 illustrates an example implementation of the circuitry of FIG. 2. The illustrated example circuitry 300 of FIG. 3 includes DG circuitry 304 connected via a connector 322 to an SOC 306 on a circuit board 302 to output the DP stream data via a USB connector 310 to an external USB device 340. The example DG circuitry 304 of FIG. 3 is connected via the connector 322 to the circuit board 302. In this example, the connector 322 is a Peripheral Component Interconnect Express Graphics (PEG) socket or slot, but other connectors can be utilized.

The DG circuitry 304 of this example includes a display engine port 360 and a display port (DP) source 362. The display engine port 360 is a digital interface to transfer display port (DP) output. The DP source 362 generates the DP stream data. The DG circuitry 304 encodes the DP stream data into PCIe Transaction Layer data packets. The DG circuitry 304 routes the PCIe Transaction Layer data packets through the connection 322 to the SOC 306.

As explained above in connection with the example of FIG. 2, the SOC 306 cooperates with the DG circuitry 304 to route DP stream data internal to the housing of a PC to an output connector 310 such as the USB-C connector. The SOC 306 of this example includes a central processing unit (CPU) 320, a Platform Controller Hub (PCH) 332, root port circuitry 312, decoding circuitry 314, memory 370, and a USB sub-system 316. The CPU 320 of this example processes and executes instructions from its onboard cache and/or the memory 370. The PCH 332 controls functions used in conjunction with a CPU 320. In some examples, these functions include clocking, display interface, and/or media interface functions.

The example root port circuitry 312 of FIG. 3 ensures that the PCIe Transaction Layer data packets from the DG circuitry 304 are received with no errors through an error detection and recovery process. The root port circuitry 312 performs a cyclic redundancy check (CRC) error detection on the PCIe Transport Layer data packets. Each PCIe Transaction Layer data packet includes a CRC field that contains a checksum value. The root port circuitry 312 calculates the CRC value of the received PCIe Transaction Layer data packets and compares it to the CRC field. If there is a mismatch, it indicates a transmission error, and the root port circuitry 312 corrects the error based on the error recovery process defined by the PCIe specification. The root port circuitry 312 corrects the error by reporting the error to the source device (i.e., DG circuitry 304) and requesting the source device to retransmit the PCIe Transaction Layer data packets. After verifying there are no errors, the root port circuitry 312 passes the PCIe Transaction Layer data packets to the example decoding circuitry 314.

The example decoding circuitry 314 of FIG. 3 decodes the PCIe Transaction Layer data packets and output DP stream data to a USB sub-system 316. The decoding circuitry 314 may decode the PCIe Transaction Layer data packets by extracting the DP data packets and reconstructing it as DP traffic with timing information (i.e., a DP stream data). If the timing information is not part of the PCIe Transaction Layer Packets header, the decoding circuitry 314 will match the PCIe Transaction Layer Packets with the separate PCIe timing packets using the packet header when it decodes the PCIe Transaction Layer Packets. The decoding circuitry 314 is integrated on the SOC 306.

The example USB sub-system 316 of FIG. 3 employs either DP tunneling or DP alternate mode to process the DP data stream. DP tunnelling is used to encapsulate one protocol within another to facilitate the transmission of data across different protocols. DP alternate mode allows a compatible USB connector to carry DP signals. In some examples, the USB connector is a USB Type-C port. The USB sub-system 316 of this example includes a USB host router 324. The USB host router 324 maps Tunneled Protocol traffic to USB packets and routes packets through the USB fabric. The USB host router 324 of this example includes a PCIe_IN adapter 326 and a DP_IN adapter 328. The PCIe_IN adapter 326 receives PCIe input signal from a PCIe device. The DP_IN adapter 328 receives a DP input signal from the decoding circuitry 314 (e.g., RCiEP circuitry) which reconstructed the data as a DP source. The USB host router 324 encapsulates the DP stream data within the USB protocol, allowing the DP content to be transmitted over different USB interfaces.

In the illustrated example, the circuitry 300 includes retimer circuitry 330. The retimer circuitry 330 is communicatively coupled to the USB sub-system 316 in the SOC 306 via a USB link 354. In some examples, the USB link 354 can be a USB4 link. The retimer circuitry 330 regenerates and retimes incoming data signals corresponding to the DP data stream from the USB sub-system 316, cleaning up any distortion or jitter that may have occurred during transmission. The retimer circuitry 330 improves the quality of the signal and reduces errors. The retimer circuitry 330 then retransmits the generated signal through another USB link 356 to the connector 310. In some examples, the USB link 356 can be a USB4 link. In some examples, the connector 310 can be a USB Type-C connector, but other USB protocols may likewise be appropriate.

In the example of FIG. 3 a USB device 340 is shown communicatively coupled via a connection 350 to the USB connector 310. In some examples, the USB device 340 can be a USB4 device, but other USB protocols devices may likewise be appropriate. In some examples, the connection 350 is implemented by a USB cable. The USB device 340 may include a USB port or connector 344 to connect to the USB cable. In the illustrated example 300 of FIG. 3, the USB port 344 received the DP stream data output by the USB connector 310. The USB device 340 can include a DP_OUT adapter 342 for outputting DP Signal or DP stream data. The DP_OUT adapter 342 is coupled to a DP connector 346 to output the DP signal or DP stream data to a DP sink, such as a display or a monitor.

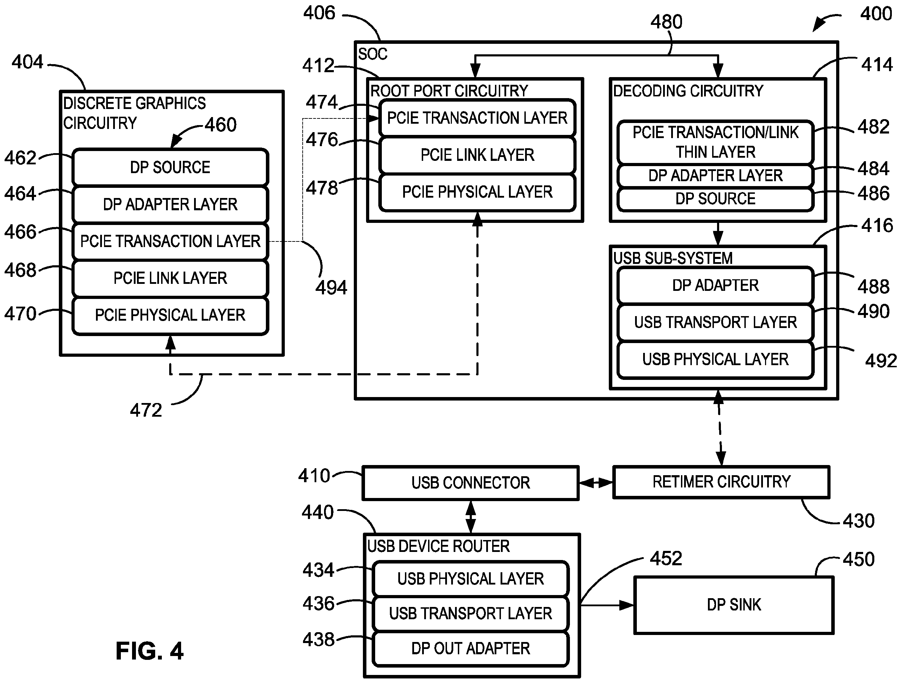

FIG. 4 is a block diagram of an example implementation of the DG circuitry 304 and the SOC 306 of FIG. 3. The example DG circuitry 404 is a PCIe end point having a DP source 462 to generate and transmit a DP signal or DP stream data. The DP stream data is sent to a DP adapter layer 464. The DP adapter layer 464, converts the DP signal or DP stream data to other display interface standards. In some examples, the DP stream data can be converted to a PCIe Transaction Layer data packet to be transmitted through the PCIe bus. A PCIe Transaction Layer 466 is a component of the PCIe protocol stack 460 mainly responsible for packing and unpacking exchanged data between the two devices on each side of the PCIe bus. The PCIe Transaction Layer 466 organizes, transmits and receives PCIe Transaction Layer data packets and ensures the reliable exchange of data.

The PCIe Transaction Layer 466 interacts with a PCIe Data Link Layer 468, which is responsible for PCIE, ensuring the data and link integrity.

A PCIe Physical Layer 470 is the lowest layer of the PCIe protocol stack 460. It deals with the physical transmission of data between devices over the PCIe bus. The PCIe Physical Layer 470 defines the electrical signaling characteristics and encoding schemes used for transmitting data over the PCIe bus. It specifies the voltage levels, timing, and signaling protocols necessary for reliable data transfer. The PCIe Physical Layer 470 manages the configuration and synchronization of data transmission lane for transmitting and receiving data.

To transport the timing sensitive PCIe Transaction Layer data packets from the DG circuitry 404 to the SOC 406, a virtual channel 494 is used. The virtual channel 494 is a feature of the PCIe protocol that enables the division of the PCIe data traffic into separate logical channels within a single physical link. Each virtual channel represents a separate transaction buffering for transmitting data between a pair of devices connected by a PCIe link. This segregation enables the simultaneous transmission of different types of traffic, such as memory accesses, input/output (I/O) requests, or configuration transactions, independently of each virtual channel. The virtual channel 494 ensures timely data transmission from the DG circuitry's PCIe Transaction Layer 466 to the root port circuitry's PCIe Transaction Layer 474.

The SOC 406 of this example includes root port circuitry 412, decoding circuitry 414 and a USB sub-system 416. The root port circuitry 412 is coupled to the DG circuitry 404 through a physical link 472 at the physical layer. The root port circuitry 412 serves as the connection point for the PCIe device. The root port circuitry 412 is integrated in the SOC 406 and is responsible for initiating and managing PCIe transactions within the PCIe topology. It serves as the interface between the Central Processing Unit 320 (FIG. 3) and the PCIe bus, allowing the CPU 320 to communicate with other PCIe devices. The root port circuitry 412 receives the PCIe Transaction Layer data packets and ensures that there are no errors with the PCIe Transaction Layer data packets by checking the CRC field on the PCIe Transaction Layer data packets. If there is a mismatch between the calculated CRC value and the CRC of the received PCIe Transaction Layer data packets, the root port circuitry 412 corrects the error by requesting the DG circuitry 404 to resend the PCIe Transaction Layer data packets.

The root port circuitry 412 then passes the PCIe Transaction Layer data packets through a primary system fabric 480 to the decoding circuitry 414 (e.g., RCiEP circuitry). The decoding circuitry 414 is implemented with a simplified Transaction and Data Link Layer 482 to process the received PCIe Transaction Layer data packets. It uses the DP adapter layer 484 to decode the PCIe Transaction Layer data packets into DP stream data and restore the function as a DP source 486.

Upon reconstruction of the DP source 486, the same data path is applied, where the DP stream data is sent to the DP adapter 488 of the USB sub-system 416 for either DP tunneling or DP alternate mode. DP tunnelling is the encapsulating of DP signals within another transport protocol, allowing DP content to be transmitted over different physical interfaces or network protocol. DP tunnelling enables greater flexibility and interoperability in connecting DP devices to different display interfaces or network protocols. In some examples, the DP signals or DP stream data can be tunneled through a USB connection. The DP stream data from the USB sub-system 416 is sent to a USB retimer circuitry 430 before it is output to a USB connector 410. The USB connector 410 is coupled to a USB device router 440 to output the DP signal or stream data to a DP sink 450.

The USB device router 440 of FIG. 4 includes a USB physical layer 434, a USB transport layer 436 and a DP_OUT adapter 438. The USB physical layer 434 represents the physical connection between two ports. The USB physical layer 434 decodes the DP packets from the SOC 406. The DP stream data transmits to the USB transport layer 436. The USB transport layer 436 manages the reliable transfer of data between USB devices. The USB transport layer 436 ensures that data packets are received without error or data loss by implementing error detection and retransmission requests. The error detection includes the use of checksums and cyclic redundancy check (CRC). The DP_OUT adapter 438 receives the USB packet and output a DP compliant signal to a DP sink 450 via a DP connection 452. The DP sink 450 can be a monitor, display, or other consumer of the DP signal.

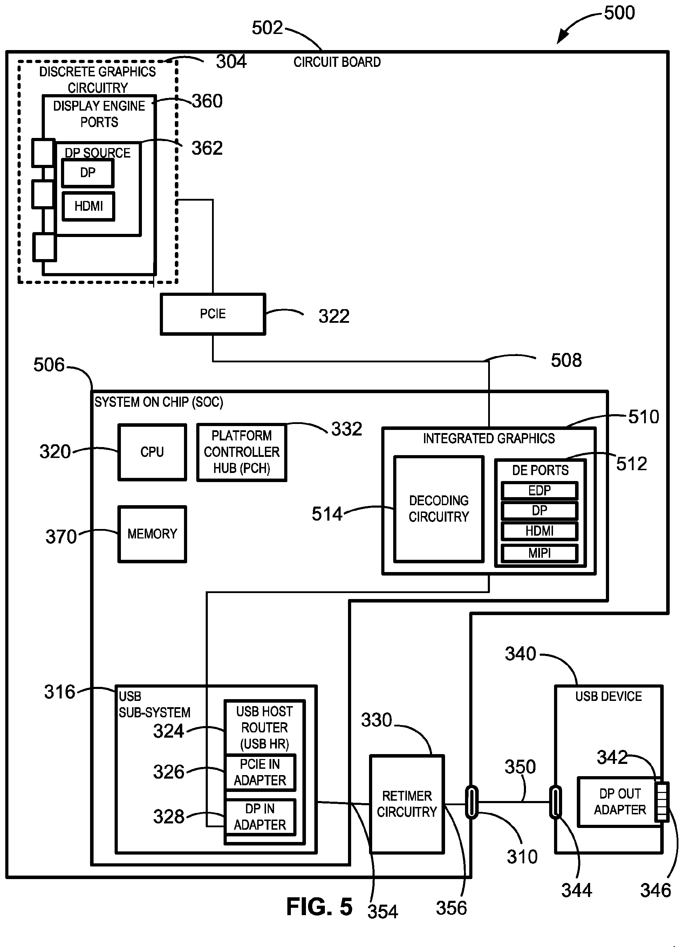

FIG. 5 illustrates an alternative implementation of the DG circuitry 304 and the SOC 306 of FIG. 3. Many of the structures of FIG. 5 are the same or similar to those present in FIG. 3. In the interest of brevity, those structures will not be re-described here. Instead, the interested reader is referred to the above description of FIG. 3 for a full and complete description of those structures. To facilitate that process, like reference numbers are used for like structures in FIG. 3 and 5. In the illustrated example 500 of FIG. 5, the DP stream data follows a different data path from the DG circuitry 304 to the USB sub-system 316. When an integrated graphics 510, which is a RCiEP, and also contains a display engine function is present in a SOC 506, the DG circuitry 304 transmits the DP stream data via connection 508 to the integrated graphics 510. The integrated graphics 510 decodes the PCIe Transaction Layer packets using the decoding circuitry 514 to reconstruct the DP stream data for output via a USB connector 310.

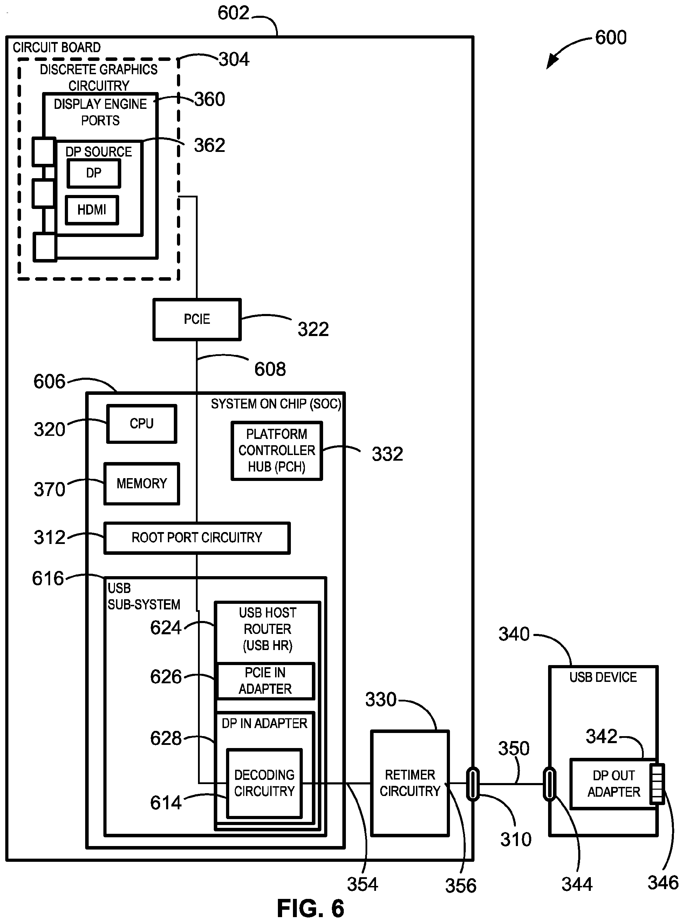

FIG. 6 is an alternative implementation of the SOC of FIG. 3. The SOC 606 of this example integrates a decoding circuitry 614 (e.g., RCiEP circuitry) in a USB sub-system 616. Many of the structures of FIG. 6 are the same or similar to those present in FIG. 3. In the interest of brevity, those structures will not be re-described here. Instead, the interested reader is referred to the above description of FIG. 3 for a full and complete description of those structures. To facilitate that process, like reference numbers are used for like structures in FIG. 3 and 6. The SOC 606, of the example of FIG. 6 obtains the output of the DG circuitry 304 via connection 608. The PCIe Transaction Layer data packets are transmitted to a receiver, the root port circuitry 312 on the SOC 606. The root port circuitry 312 receives the PCIe Transaction Layer data packets and transmits the PCIe Transaction Layer data packets to the decoding circuitry 614. The decoding circuitry 614 decodes the PCIe Transaction Layer data packets. The decoding circuitry 614 is integrated in the USB sub-system 616. More specifically, the decoding circuitry 614 is integrated in a DP_IN adapter 628 of a USB host router 624. The decoding circuitry 614 maintains its function to decode the PCIe Transaction Layer packets to reconstruct the DP stream data for output via a USB connector 310.

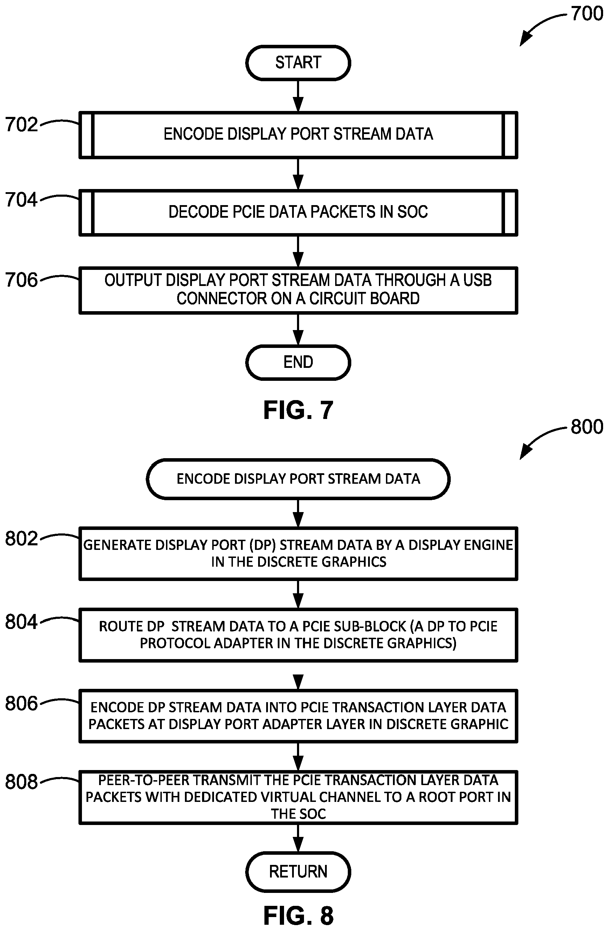

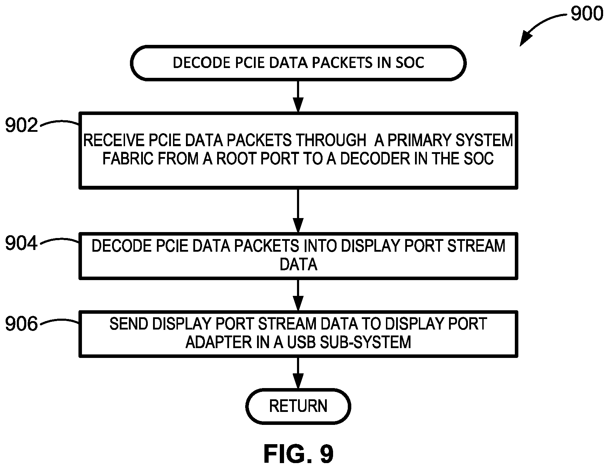

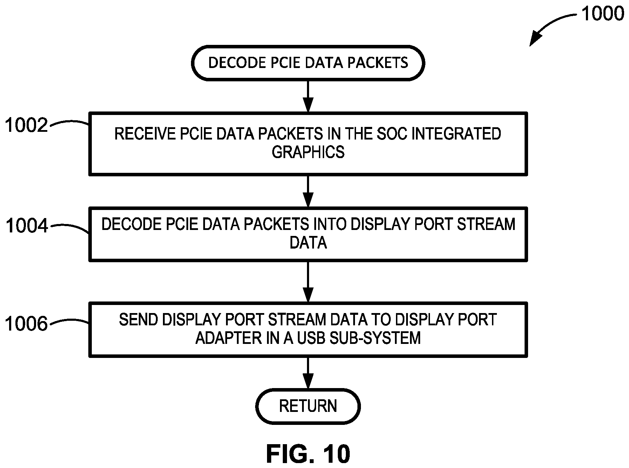

FIG. 7 is a flowchart representative of example machine readable instructions and/or example operations that may be executed, instantiated, and/or performed by the example DG circuitry and SOC of FIG. 2, 3, 4, 5, or 6. The example machine readable instructions and/or operations of FIG. 7 routes display stream data for output via a USB connector 210 (FIG. 2). Example 700 of FIG. 7 begins at block 702 at which the DG circuitry 204 (FIG. 2) encodes the display port stream data, as described in further detail below in connection with FIG. 9. At block 704, the SOC 206 (FIG. 2) decodes the PCIe Transaction Layer data packets, as described in further detail below in connection with FIG. 10 and 11 based on different implementation of the decoding circuitry 214 (FIG. 2). At block 706, the circuit board 202 (FIG. 2) re-constructs and outputs the Display Port stream data via a USB connector 210 (FIG. 2).

FIG. 8 is a flowchart representative of example machine readable instructions and/or example operations that may be executed, instantiated, and/or performed by the DG circuitry of FIG. 2, 3, 4, 5, or 6. The example machine readable instructions and/or operations of FIG. 8 encodes the display port stream data. The example flowchart 800 of FIG. 8 begins at block 802 at which the display engine in the DG circuitry 404 generates display port (DP) stream data. At block 804, the DG circuitry 404 routes the DP stream data to a PCIe sub-block. A PCIe sub-block can be a DP to a PCIe protocol adapter such as the DP adapter layer 464 (FIG. 4) in the DG circuitry 404. At block 806, the DP adapter layer 464 encodes the display port stream data into PCIe Transaction Layer data packets. At block 808, the DG circuitry 404 peer-to-peer transmit the PCIe Transaction Layer data packets containing the DP stream to the PCIe root port circuitry 412 (FIG. 4) in the SOC 406 (FIG. 4). The PCIe Transaction Layer data packets are transmitted to the SOC 406 with dedicated virtual channel 494 (FIG. 4) to preserve the timing information.

FIG. 9 is a flowchart representative of example machine readable instructions and/or example operations that may be executed, instantiated, and/or performed by the SOC of FIG. 3, 4, or 6. The example machine readable instructions and/or operations of FIG. 9 decode the PCIe Transaction Layer data packets. The example flowchart 900 of FIG. 9 begins at block 902 at which the decoding circuitry 414 (FIG. 4) or decoder receives PCIe Transaction Layer data packets via a primary system fabric 480 (FIG. 4) from a root port circuitry 412 (FIG. 4). At block 904, the decoding circuitry 414 decodes the PCIe Transaction Layer data packets into DP stream data. At block 906, the decoding circuitry 414 sends the DP stream data to a DP adapter 488 (FIG. 4) in a USB sub-system 416 (FIG. 4).

FIG. 10 is a flowchart representative of example machine readable instructions and/or example operations that may be executed, instantiated, and/or performed by the SOC of FIG. 5. The example machine readable instructions and/or operations of FIG. 10 decode the PCIe Transaction Layer data packets. The example flowchart 1000 of FIG. 10 begins at block 1002 at which the integrated graphics 510 (FIG. 5) receives PCIe Transaction Layer data packets. At block 1004, the decoding circuitry 514 in the integrated graphics 510 decodes the PCIe Transaction Layer data packets into DP stream data. At block 1006, the integrated graphics 510 sends the DP stream data to a DP_IN adapter 328 (FIG. 5) in a USB sub-system 316 (FIG. 5).

From the foregoing, it will be appreciated that example systems, apparatus, articles of manufacture, and methods have been disclosed that route display stream data within the PC housing 201 (FIG. 2) for output via a USB connector 210 (FIG. 2). Disclosed systems, apparatus, articles of manufacture, and methods improve the efficiency of using a computing device by enabling DP stream data to be output via a USB connector without the use of a USB Add In Card 114 (FIG. 1) on the circuit board 202 (FIG. 2), and without employing cables 102 (FIG. 1) external to the PC housing 201 to route the output of Display Port (DP) circuitry on a DG card 204 to a USB connector 210 (FIG. 2). Disclosed systems, apparatus, articles of manufacture, and methods are accordingly directed to one or more improvement(s) in the operation of a machine such as a computer or other electronic and/or mechanical device.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. A circuit board comprising:
decoding circuitry to decode Peripheral Component Interconnect Express (PCIe) data packets into a display port stream data, the PCIe data packets encoded by a discrete graphics circuitry; and
a Universal Serial Bus (USB) connector on the circuit board coupled to the decoding circuitry, wherein the USB connector is to output the display port stream data.

2. The circuit board of any preceding claim, further including an integrated USB sub-system coupled to the decoding circuitry.

3. The circuit board of any preceding claim, wherein the discrete graphics circuitry transmits PCIe data packets to a USB sub-system based on PCIe peer-to-peer transaction with dedicated virtual channel.

4. The circuit board of any preceding claim, wherein the circuit board is in a housing, and there is no cabling external to the housing to couple a discrete graphics card to a USB sub-system.

5. The circuit board of any preceding claim, wherein the decoding circuitry is a root complex integrated end point (RCiEP) circuitry.

6. The circuit board of any preceding claim, wherein the decoding circuitry is included in at least one of 1) a System on Chip (SoC), 2) a USB sub-system, or 3) an integrated graphics.

7. The circuit board of any preceding claim, further including a system to support display over the USB connector.

8. An electronic device comprising:
a discrete graphics card to encode display port stream data into PCIe data packets; and
a circuit board coupled to the discrete graphics card, the circuit board including:
circuitry to decode the PCIe data packets into a display port stream data; and
a USB connector to output the display port stream data.

9. A discrete graphics card comprising:
a circuit board; and
a display port adapter to encode a display port stream data as Peripheral Component Interconnect Express (PCIe) data packets.

10. The discrete graphics card of claim 9, wherein the discrete graphics card is in a housing, and there is no cabling external to the housing to couple the discrete graphics card to a USB sub-system.

11. A method comprising:
encoding a display port stream data into Peripheral Component Interconnect Express (PCIe) packets at a graphics card;
decoding the PCIe packets on a circuit board to reconstruct the display port stream data; and
outputting the display port stream data through a USB connector of the circuit board.

12. The method of claim 11, wherein an encoder places timing information from the PCIe packets into timing packets.

13. The method of any of claims 11 to 12, wherein the timing packets are encoded in at least one of 1) a header of a PCIe packets, 2) as separate PCIe packets to transfer to an end point.

14. The method of any of claims 11 to 13, wherein the PCIe packets are transported from an encoder to a decoder through a virtual channel over PCIe using a peer-to-peer (P2P) protocol.

15. The method of any of claims 11 to 14, wherein reconstructing of the display port stream data includes adding timing information to the display port stream data.
